# EUROPEAN PATENT SPECIFICATION

(11) **EP 0 485 220 B1**
(45) Date of publication and mention of the grant of the patent: **04.05.1994**
(21) Application number: 91310323.0
(22) Date of filing: 07.11.1991
(51) Int. Cl.: F16L 11/127

(54) **Electrical heating system for subsea flexible pipelines**
Elektrisches Heizsystem für flexible Untersee-Pipeline
Système de chauffage électrique pour conduite flexible sous-marine

(30) Priority: 07.11.1990 BR 9005628
(43) Date of publication of application: 13.05.1992
(73) Proprietor: PETROLEO BRASILEIRO S.A. - PETROBRAS, Rio de Janeiro (BR)
(72) Inventor: Costa Filho, Fernando Homem da, Rio de Janeiro (BR)
(74) Representative: Barlow, Roy James

(56) References cited:
- EP-A- 0 244 048
- DE-A- 3 346 191
- FR-A- 1 178 198
- FR-A- 1 418 758
- US-A- 3 377 463
- US-A- 4 241 763
- US-A- 4 402 346
- US-A- 4 455 474
- US-A- 4 525 813
- US-A- 4 667 084
- WO-A89/11616

## Description

This invention relates to a system for uniformly heating subsea flexible pipelines through electric current based on the Joule effect, that is, heat is produced by the circulation of the electric current through the metallic armouring of the pipeline, in which, by heating the crude oil to, or maintaining it at, the flowing temperature, it is possible to reduce the pressure drop in the pipeline and to increase the duration of the period available for flowing, thus recovering more oil.

One of the difficulties in the production of oil from reserves located in deep waters is the low temperature which the crude oil acquires as it flows from the well-head to the production platform. This low temperature increases the viscosity of the petroleum and consequently increases the pressure drop in the pipeline, thereby reducing the flow rate and the flowing period of the well. The main factors which contribute to this unfavourable situation are the low temperature (below 10° C) at the seabottom, the large length of the pipeline from the well-head to the platform, and the high natural viscosity of the crude oil.

In offshore petroleum fields the production wells are connected, whether to a production platform or to a subsea manifold, by means of pipelines arranged on the seabottom. The choice of the production system to be utilized, and the number of wells, depend upon various parameters such as field size and behaviour, recovery method, water depth, etc. The wells may produce directly through individual lines up to the platform, or may converge towards a subsea production manifold and therefrom to the platform through a single line of larger diameter.

During production, the crude oil reaches the well-head at a temperature which is a function of, among other things, the depth of the producing zone (geometric gradient) and the petroleum flow rate (thermal exchanges by conduction and convection). Considering light crude oils, in the configurations mentioned above, the petroleum flows easily up to the production platform through a subsea pipeline without thermal insulation and without heating. The flow temperature varies depending upon the length of the pipeline and upon the temperature of the water along the path which, due to the high fluidity of said petroleum, does not impair the flow.

However, heavy or viscous crude oils when flowing through conventional subsea pipelines, become even more viscous, increasing considerably the pressure drop in the oil pipeline, and sometimes impairing production.

The thermal insulation of subsea pipelines is a practice which is already being utilized and is already well developed but which, by itself, does not in some cases solve the problem of viscous oil flow, that is, the thermal insulation minimizes the problem but locations of low temperatures and with long pipelines give rise to a considerable thermal exchange which increases crude oil viscosity and the pressure drop in the pipeline, consequently reducing the duration of the period during which oil can flow from the well without cleaning being necessary.

The main physicochemical characteristics of petroleum, as regards its flow properties are the pour points and the viscosity. Although, based on these two characteristics, it is possible to distinguish different types of petroleum to define the flow method to be utilized, it is recommended that each flow type be treated individually, taking into account the peculiarities of the crude oil and the local conditions. In order to minimize the pressure drop which occurs in the flow of crude oil, three possibilities exist:
(a) the diameter of the pipeline may be increased, with a limitation in the diameter of the pipelines for deep-water application;
(b) the pumping head may be increased, but this is applicable only in places where it is easy to install pumps, for instance, on platforms, vessels, etc.;
(c) the viscosity of the fluid may be reduced, but this would be achieved by means of heating (or maintaining the temperature of) the crude oil in the pipeline.

Considering this last possibility, since the viscosity of the fluid drops abruptly as the temperature increases, the relationship is exponential, as shown by Andrade's equation below:${\text{µ = A.e}}^{\text{(B/T)}}$
where
- µ: = viscosity
A and B are constants
- T: = Temperature
- e: = 2.718282

In spite of the production cost of flexible pipelines being higher than that of rigid pipelines, the designers of crude oil flow systems in deeper waters have been giving preference to the utilization of flexible pipelines. The comparative table below helps to understand better this preference for flexible pipelines.

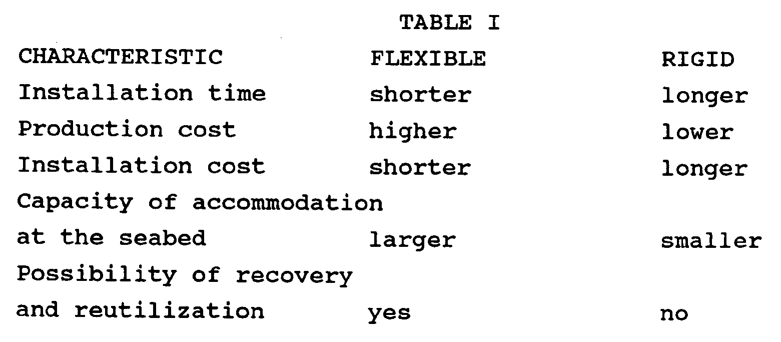

Flexible pipelines are widely used all over the world. Several manufacturers exist, each having a design which is defined by the configuration of the structures and by the material utilized. These flexible pipelines are basically formed by alternate layers of steel spirals intercalated with layers of a thermally insulating material, such as a polyamide-based elastomer. The internal steel layer is interlocked, whereas the outermost layer is constituted by a crossed armouring, with the purpose of providing the pipeline with a stronger structural reinforcement, this whole ensemble being coated with a polyamide layer.

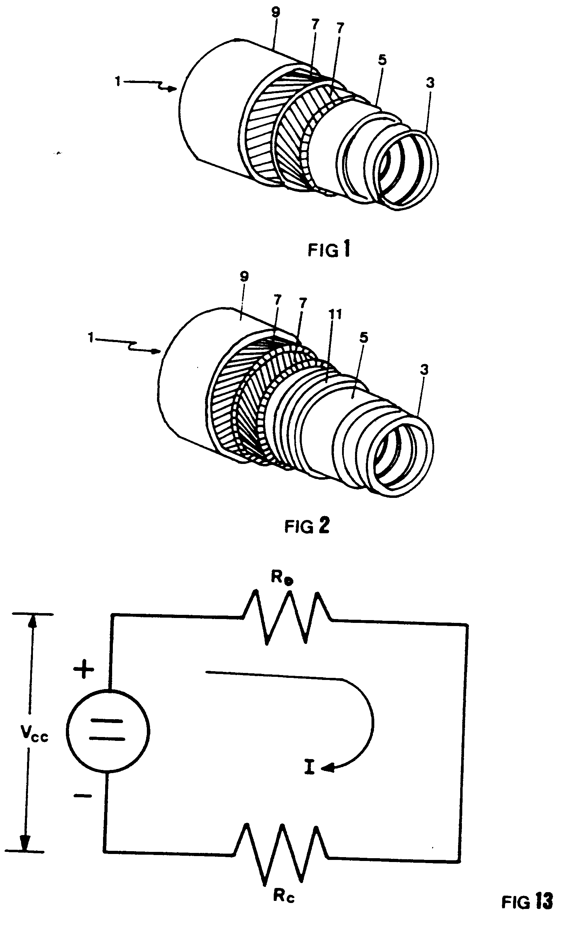

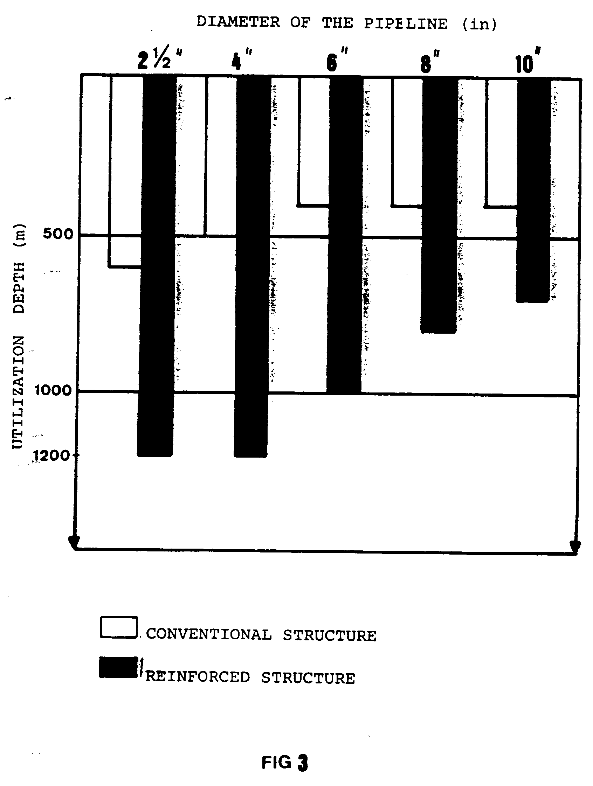

FR-A-1418758 discloses a type of union, suitable for connecting one length of a flexible pipe to another, so as to effect sealing of the assembled pipeline and also to effect electrical connections, if necessary. The union can also be used in drilling operations, by substituting lengths of tube in the drilling string. Figures 1-12 show different ways of obtaining electrical contact.

It is an object of this invention to provide a uniform heating system for subsea flexible pipelines through the circulation of an electric current which crosses the steel armourings of the flexible pipeline, generating energy and dissipating a certain amount of heat to the pipeline and to the fluid therein, maintaining the temperature differential between the environment and the production line so as not to interrupt the fluid flow.

This invention relates to an electric heating system for subsea flexible pipelines which includes the provision of an electric unit consisting of a controlled rectifying unit, which is the source of current, an electric cable positioned in parallel with the flexible pipeline for the return of the current, and two terminal connectors which electrically isolate the double-reinforced crossed armouring, the electric current being conducted by the tensile armouring and returning by an electric cable installed outside the flexible pipeline.

Still in accordance with this invention, the electric heating system for subsea flexible pipelines includes the provision of an electric unit consisting of a controlled rectifier as the source of current, an electric cable for the return of the current having in its end grounded at the seabottom, an electrode (anode), and two terminal connectors, the return of the current, both in case of conduction by the tensile armouring and by the internal carcass, being carried out through the electrode installed at the seabottom and connected to the platform.

In addition, other embodiments of isolation and electric connections of the layers of the flexible pipelines are provided in accordance with this invention, which shall be better detailed below.

The characteristics and advantages of this invention shall become more evident from the following detailed description of the invention taken together with the accompanying drawings, in which:-
Figure 1 is a perspective view showing the structure of an already known flexible pipeline which is normally installed only down to water depths of nearly 600 m;
Figure 2 is a perspective view showing the structure of an already known flexible pipeline for utilization in water depths greater than 600 m;
Figure 3 is a graph showing the variation of the utilization depth (m) with the diameter of the pipeline (in), there being a limitation in the diameter of the pipelines for application in deep waters;
Figure 4 is a view of a graph exemplifying the variation of viscosity (cp) with temperature for some crude oil types formed in the Campos Basin, Rio de Janeiro, Brazil;
Figure 5 is an illustrative view of the electric heating system for subsea flexible pipelines, with the electric cable for the current return positioned in parallel with the flexible pipeline;
Figure 6 is a sectional view of the flexible pipeline and connector of the system shown on Figure 5;
Figures 7 to 11 are section views showing other embodiments of isolation and electric connections of the layers of the flexible pipelines in accordance with this invention;
Figure 12 is an illustrative view of the electric heating system for subsea flexible pipelines, with an electric cable for current return having an electrode in its end; and
Figure 13 is an illustrative view of the electric circuit which is purely resistive with a DC source.

As can be seen from Figures 1 and 2, the flexible pipelines 1 utilized in production systems in the case of installations limited to water depths of nearly 600 m are basically constituted by concentric layers having a spiraled carcass in stainless steel 3, a polyamide layer 5, a double layer 7 of crossed armourings, and an external polyamide layer 9. As shown in Figure 2, for water depths in excess of 600 m, the flexible pipeline 1 is given a reinforcement of a spiraled carcass 11 of zeta wire, between the polyamide layer 5 and the double layer 7 of crossed armourings.

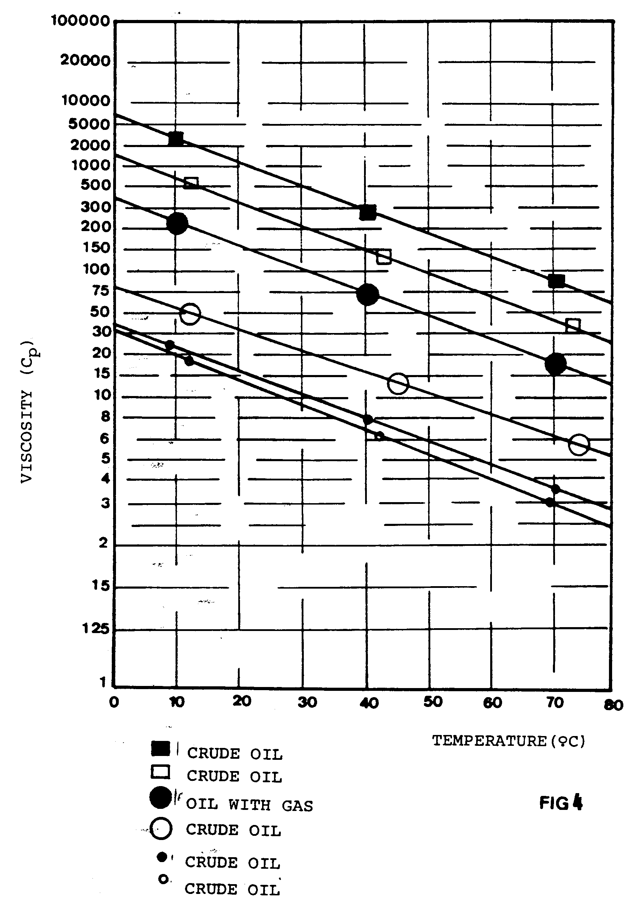

Returning to equation (1), mentioned above and making an analysis together with Figure 4 which exemplifies the variation of viscosity (µ) of the fluid with temperature, it can be seen that the more viscous is the crude oil, the larger will be the reduction in its viscosity for a given temperature increase. The temperature of the flowing fluid must be carefully studied, since in certain situations it is more economical to heat the fluid than to increase the pumping head.

Equation (1) shows that, in a laminar flow, the pressure drop in the pipeline is directly proportional to the viscosity of the fluid
where
R =$\frac{\text{DV}}{\text{µ}}$ then for laminar flow f =$\frac{\text{64}}{\text{R}}$$\text{ΔH = f} \frac{\text{L}}{\text{D}} \text{·} \frac{\text{V²}}{\text{2g}}$$\text{∴ ΔH =} \frac{\text{64 LVµ}}{\text{D² 2g}}$
where
- ΔH: = pressure drop
- f: = friction factor
- L: = pipeline length
- V: - fluid velocity
- D: = pipeline diameter
- g: = gravitational acceleration
- µ: = fluid viscosity

Analysing the graph of Figure 4 and equation (2) above, it can be seen that increasing the temperature of a given flow by 20° C, depending upon the initial temperature and the type of crude oil, gives a reduction in pressure drop of 50-70 % and the lower the initial temperature of the crude oil and the higher its viscosity, the larger will be the reduction in pressure drop.

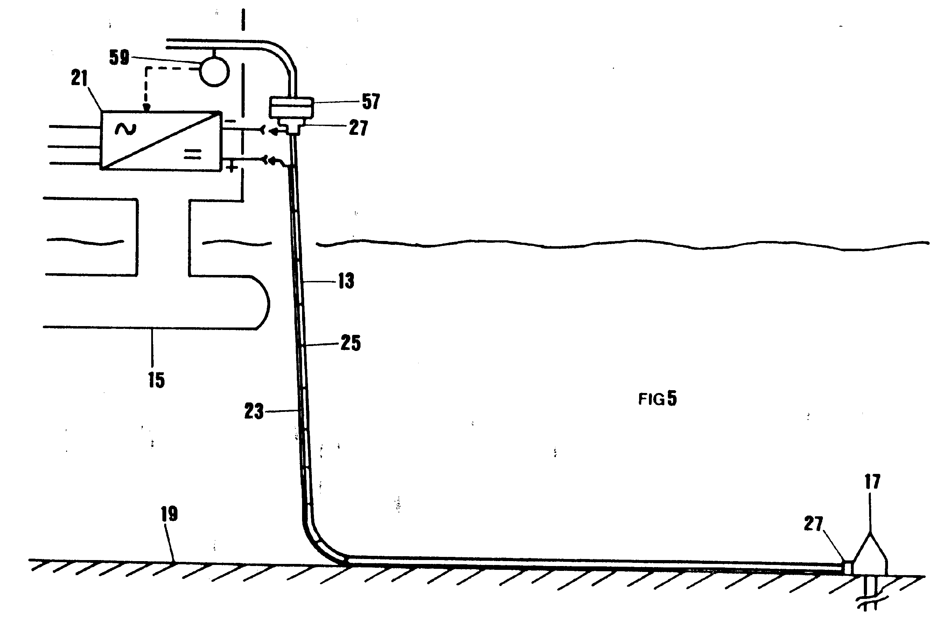

Based on the previous data, there is provided according to this invention an electric heating system for subsea flexible pipelines based on the Joule effect that is heat is produced by the circulation of electric current through the metallic armouring of the flexible pipeline. The system includes, as can be seen from Figure 5, a flexible pipeline 13 which extends from the platform 15 to a wet christmas tree 17 positioned on the seabottom 19, a controlled rectifier 21 as the source of current, an electric cable 23 positioned in parallel to the flexible pipeline 13 by means of brackets 25, and two terminal connectors 27 which electrically isolate the metallic armouring.

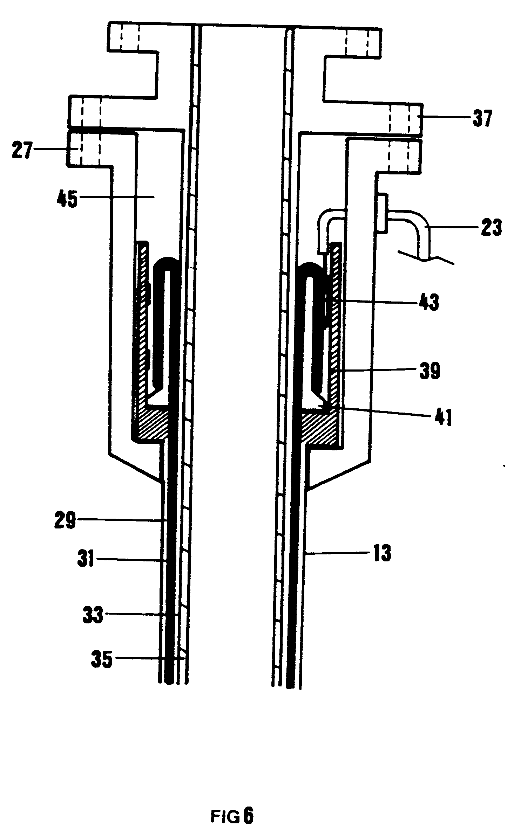

As can be seen from Figure 6, the flexible pipeline 13 consists basically of an external polyamide layer 29, a double-reinforced crossed armouring 31, a polyamide layer 33, and an internal stainless steel carcass 35, the upper end of said flexible pipeline 13 being connected internally by a connector 27 provided at its top with an adapter 37, with an electric isolator 39 and a support 41. The double-reinforced crossed armouring 31 of the flexible pipeline 13 is folded and surrounded by the bracket 43 being coupled, inside the connector 27, internally to the electric isolator 39 with its end arranged on the support 41. There is also an electrically isolating filler 45 inside the connector 27, the electric current originating from the controlled rectifier 21 running through the double-reinforced crossed armouring 31 (tensile armouring) and returning through the electric cable 23 outside the flexible pipeline 13.

Other embodiments of isolation and electric connections of the layers of the flexible pipelines are also provided in accordance with this invention.

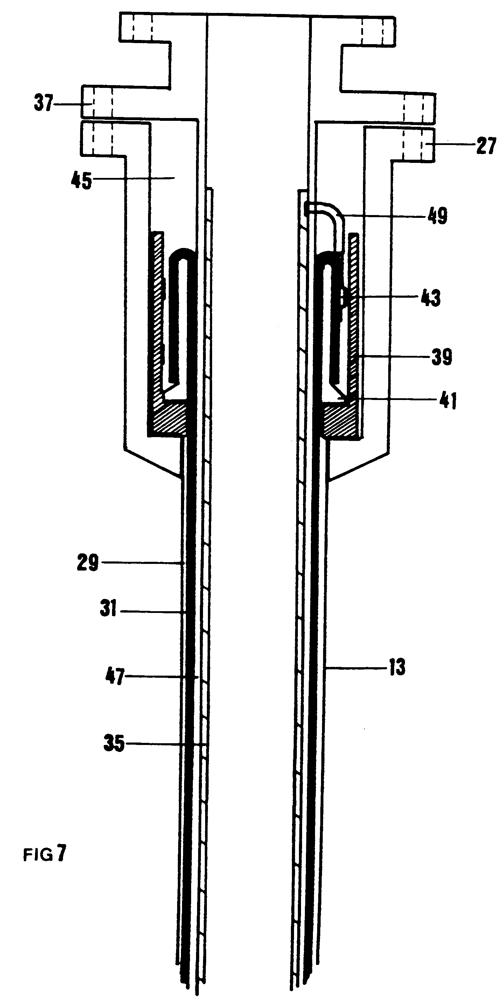

Figure 7 shows the polyamide layer 33 replaced by an electric isolating layer 47, the electric current being conducted by the double-reinforced crossed armouring 31 and returning through the metal carcass 35 thus dispensing, in this case, with the use of the electric cable 23 and deriving greater savings in material and easier handling and installation of the line without any electric cable coupled thereto. The double-reinforced crossed armouring 31 and the interlocked stainless steel carcass 35 are isolated from one another along the line and from the connector 27 and electrically connected together by means of an electric cable 49.

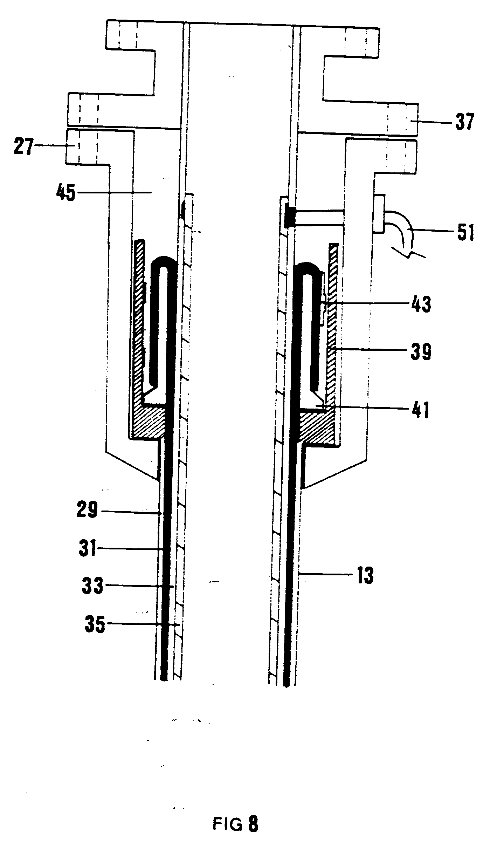

In Figure 8, the circulation of electric current is carried out through the interlocked stainless steel carcass 35 with return through an electric cable clamped externally to the flexible pipeline 13. This option offers the advantage of concentrating the generation of heat closer to the inside of the flexible pipeline. The double-reinforced crossed armouring 31 and the interlocked stainless steel carcass are isolated from each other and from the connector 27, but the electric cable 51 is connected to one end of the interlocked stainless steel carcass 35.

In addition to the greater proximity between the thermal source and the inside of the flexible pipeline, the systems of heating, through the internal interlocked carcass offer another important possibility as an advantage. This is applicable to the case of lines which have been obstructed by paraffinic formations which need to be removed. In this case, compressed air can be injected, so as to open a way through the obstructing material and, thereafter, water can be injected, so as to fill the spaces opened by the injection of compressed air. Therefore, the current can pass also through the fluid which will be in electric contact with the internal interlocked carcass.

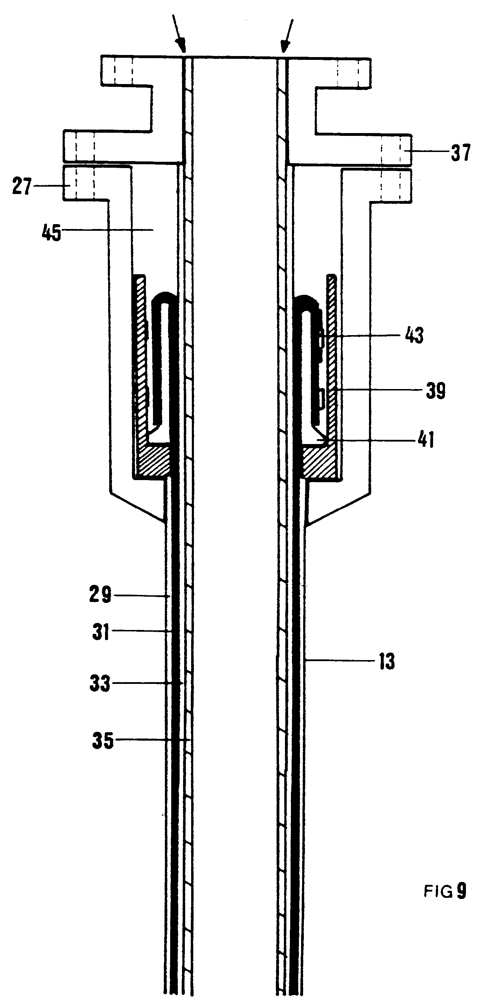

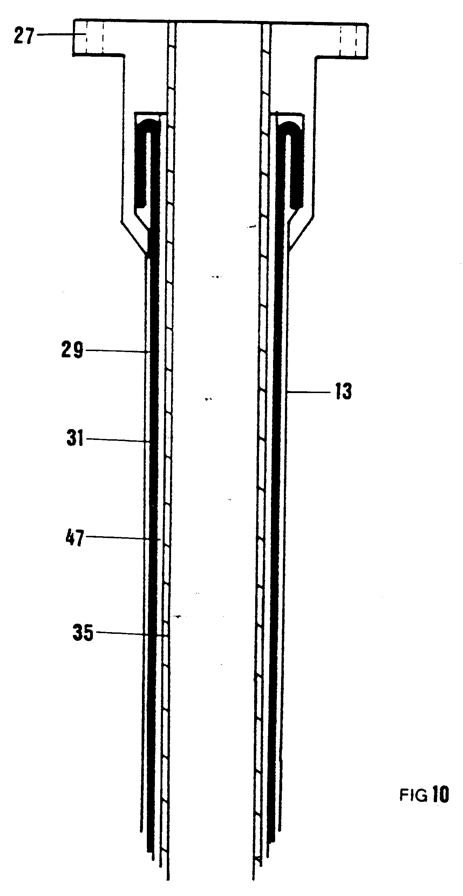

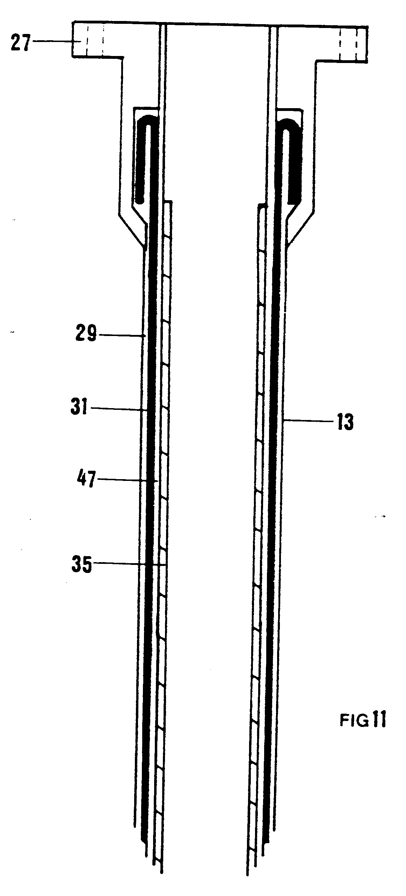

Moreover, Figures 9, 10 and 11, respectively, show that:
(a) the double-reinforced crossed armouring 31 which may be isolated from the interlocked stainless steel carcass 35 and from the connector 27, with electric connection between the interlocked stainless steel carcass 35 and the connector 27 (Fig. 9),
(b) the double-reinforced crossed armouring 31 and the interlocked stainless steel carcass 35 may be isolated along the line and electrically connected by means of the connector 27 (Fig. 10), or
(c) the double-reinforced crossed armouring 31 and the interlocked stainless steel carcass 35 may be isolated from each other, the double-reinforced crossed armouring 31 connected to the connector 27, and the interlocked stainless steel carcass 35 isolated from the connector 27 (Fig. 11).

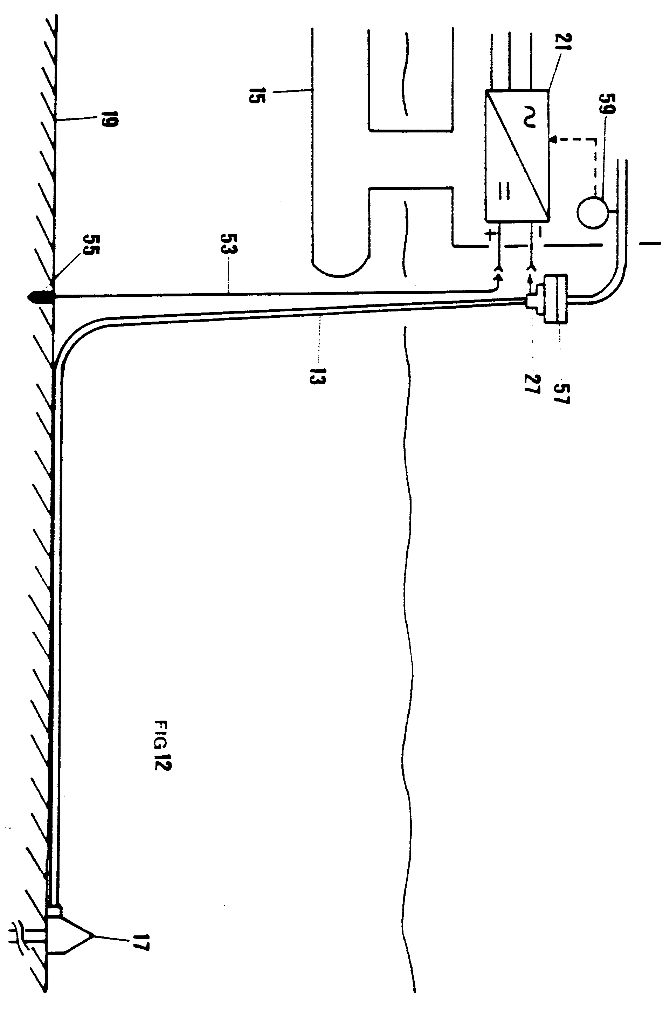

In another embodiment of the invention, as seen in Figure 12, the electric heating system for subsea flexible pipelines includes also the provision of an electric cable 53 presenting at its lower end an electrode (anode) 55 grounded at the seabottom 19. The return of the electric current, both in case of conduction through the double-reinforced crossed armouring 31 and of conduction through the interlocked stainless steel carcass 35, is through the electrode 55, installed at the seabottom 19 and connected to the platform 15, and this system may prove to be of interest in case of several satellite wells with production lines using an electric current heating system, since it makes it possible to provide a return common to all of them. In addition, it may simplify the detailing of the line fittings since it dispenses with the need to isolate them, that is the conducting carcass, electrically connected to the fitting, will complete the circuit with the electrode through seawater. This system may eventually even provide cathodic protection for the elements connected to the fitting (WCT - wet christmas tree and the metallic layers themselves of the flexible line).

The systems may operate with either DC or AC as preferred for the specific convenience for each alternative. However, the use of direct current is more indicated for heating, since the direct current generates more heat than a peak AC voltage of the same magnitude. Moreover direct current requires less isolating material and renders the circuit purely resistive, without capacitive and inductive reactances, thus reducing the impedance.

As can be seen from the electric circuit represented on Figure 13, where:
- V_{cc}: = Voltage of direct current applied
- R_{d}: = Electric resistance of the flexible pipeline
- R_{c}: = Electric resistance of the cable for return of the current
- I: = Circulating electric current,

the electric circuit is purely resistive with a direct current source.

The R_{c}/R_{d} ratio must be as low as possible, since the heat produced in the pipeline and in the cable will be proportional to their electric resistance. Thus, when dimensioning the electric cable, one must bear this in mind, so as to ensure a high efficiency for the heating. The temperature control of the crude oil is performed by a temperature sensor 59 installed at the crude oil arrival pipeline after the DCDC 57 (Fig. 5). This sensor 59 sends a signal to the rectifier 21 which controls the current through the cable. Thus, a continuous adjustment of fluid flow temperature is achieved.

The electric heating system for subsea flexible pipelines, according to this invention, is extremely simple and perfectly under the domain of the national technology. The investments required for its achievement are relatively small and depend basically upon the amount of heat to be supplied, which in its turn shall be minimized as a function of the thermal isolation of the pipeline.

The advantages offered by the heating system of this invention include:-
(a) the automatic control of crude oil temperature,
(b) the easy alteration of the adjusted temperature,
(c) the increase in petroleum production as the pressure drop in the flowing pipeline is the limiting factor,
(d) the increased field oil recovery, and
(e) the reduction or elimination of incrustations on the internal pipeline wall, due to the adherence of paraffinic substances.

It must be pointed out that the system herein proposed is not oriented only towards crude oil flow, but can be applied also to gas pipelines, thus achieving the reduction or elimination of hydrate formation, as well as the reduction or elimination of cleaning requirements otherwise satisfied by means of scrapers or pigs.

## Claims

1. A subsea flexible pipeline (13) including an electric heating system, and consisting of an external polyamide layer (29), a double-reinforced crossed armouring (31), a further optionally polyamide layer (33) (47) and an internal stainless steel carcass (35), characterised by including means for circulating an electric current through one of the double-reinforced crossed armouring (31) and said stainless steel carcass (35); a controlled rectifier (21); and a return path, optionally an electric cable (23) positioned in parallel to said flexible pipeline (13) by means of brackets (25); and terminal connectors (27) which isolate electrically said double-reinforced crossed armouring (31), said flexible pipeline (13) extending from the platform (15) to a wet christmas tree (17) intended to be positioned on the seabottom (19).

2. A pipeline according to claim 1, characterised in that the upper end of said flexible pipeline (13) is connected, internally, by a connector (27) provided at the top with an adapter (37) with an electric isolator (39) and a support (41), said double-reinforced crossed armouring (31) of said flexible pipeline (13) being folded and surrounded by a bracket (43) coupled inside said connector (27) internally to the electric isolator (39) with an end arranged on the support (41), the electric current originating from said controlled rectifier (21) being conducted through said double-reinforced crossed armouring (31) and returning by a said electric cable (23) installed externally of said flexible pipeline (13).

3. A pipeline according to claim 1 or 2, characterised in that said further layer is an electrically insulating layer (47); in that the conduction of the electric current is achieved through the double-reinforced crossed armouring (31) and the interlocked stainless steel carcass (35) connected in series; and in that said double-reinforced crossed armouring (31) and said interlocked stainless steel carcass (35) are electrically isolated from one another along the line of the connector (27) and electrically connected by means of an electric conductor (49).

4. A pipeline according to claim 1 or 2, characterised in that the circulation of the electric current is achieved through the interlocked stainless steel carcass (35) and an electric cable (51) clamped externally to said flexible pipeline (13) and connected in series with said carcass (35), said double-reinforced crossed armouring (31) and said interlocked stainless steel carcass (35) being electrically isolated from each other and from said terminal connector (27).

5. A pipeline according toclaim 1 or 2, characterised in that said double-reinforced crossed armouring (31) is electrically isolated from both said interlocked stainless steel carcass (35) and said connector (27), and including an electric connection between said interlocked stainless steel carcass (35) and said connector (27).

6. A pipeline according toclaim 1 or 2, characterised in that said double-reinforced crossed armouring (31) and said interlocked stainless steel carcass (35) are isolated along the line and electrically connected through said connector (27).

7. A pipeline according to claim 1 or 2, characterised in that said double-reinforced crossed armouring (31) and interlocked stainless steel carcass (35) are electrically isolated from one another; and in that said double-reinforced crossed armouring (31) is connected to said terminal connector (27); and said interlocked stainless steelcarcass (35) is electrically isolated from said connector (27).

8. A pipeline according to any one of claims 1, 2 and 4 to 7, characterised in that the electric cable (53) forming said return path means has at its lower end, intended to be grounded at the sea-bottom (19), an anode (55) for return of the electric current, through said cable (53) to the platform, the current return from either said double-reinforced crossed armouring (31) or said interlocked stainless steel carcass (35), being achieved through said electrode (55) at the seabottom (19) and connected via said cable (53) to the platform (15).

9. A pipeline according to any one of the preceding claims, characterised by operating in direct current mode.

10. A pipeline according to any one of the preceding claims, characterised in that there is a temperature sensor (59) installed in the crude oil arrival pipeline and adapted to send a signal to said rectifier (21) for controlling the current through the cable, and hence controlling the crude oil temperature.

## Patentansprüche

1. Eine flexible Unterwasser-Rohrleitung (13), die ein elektrisches Heizsystem aufweist und eine externe Polyamidschicht (29), eine doppelt-verstärkte gekreuzte Einlage bzw. Bandagierung (31), weiterhin wahlweise eine Polyamidschicht (33) (47) und ein inneres Gerüst (35) aus rostfreiem Stahl aufweist, gekennzeichnet durch eine Einrichtung zum Zirkulierenlassen eines elektrischen Stroms durch eine der doppeltverstärkten gekreuzten Einlagen (31) und des Gerüsts (35) aus rostfreiem Stahl; ein gesteuerter Gleichrichter (21); und ein Rückwegpfad, wahlweise ein elektrisches Kabel (23), das parallel zu der flexiblen Rohrleitung (13) mittels Befestigungen (25) angebracht ist; und Anschlußverbindungsstücke (27), die die doppelt-verstärkte gekreuzte Einlage (31) elektrisch isolieren, wobei sich die flexible Rohrleitung (13) von der Plattform (15) zu einem sogenannten wet christmas tree (nassen Weihnachtsbaum) (17) erstreckt, der dazu vorgesehen ist, auf dem Meeresboden (19) positioniert zu werden.

2. Eine Rohrleitung nach Anspruch 1, dadurch gekennzeichnet, daß das obere Ende der flexiblen Rohrleitung (13) intern durch ein Verbindungsstück (27) verbunden ist, das an dem oberen Ende mit einem Adapter (37), mit einem elektrischen Isolator (39) und einem Träger (41) versehen ist, wobei die doppelt-verstärkte gekreuzte Einlage (31) der flexiblen Rohrleitung (13) umgebogen und von einer Stütze (43) umgeben ist, die innerhalb des Verbindungsstückes (27) intern mit einem an dem Träger (41) angeordneten Ende an den elektrischen Isolator (39) angeschlossen ist, wobei der elektrische Strom aus dem gesteuerten Gleichrichter (21) kommt und durch die doppelt-verstärkte gekreuzte Einlage (31) geleitet wird und durch das elektrische Kabel (23), das außerhalb der flexiblen Rohrleitung (13) angebracht ist, zurückfließt.

3. Eine Rohrleitung nach Anspruch 1 oder 2, dadurch gekennzeichnet, daß die weitere Schicht eine elektrisch isolierende Schicht (47) ist; daß die Leitung des elektrischen Stroms durch die doppelt-verstärkte gekreuzte Einlage (31) und das eingeschobene Gerüst (35) aus rostfreiem Stahl erreicht wird, die in Reihe geschaltet sind; und daß die doppelt-verstärkte gekreuzte Einlage (31) und das eingeschobene Gerüst (35) aus rostfreiem Stahl voneinander entlang der Leitung des Verbindungsstückes (27) elektrisch isoliert sind und mittels eines elektrischen Leiters (49) elektrisch verbunden sind.

4. Eine Rohrleitung nach Anspruch 1 oder 2, dadurch gekennzeichnet, daß der Kreislauf des elektrischen Stroms durch das eingeschobene Gerüst (35) aus rostfreiem Stahl und ein elektrisches Kabel (51) erreicht wird, das von außen an die flexible Rohrleitung (13) angeklemmt oder angeklammert ist und mit dem Gerüst (35) in Reihe geschaltet ist, wobei die doppelt-verstärkte gekreuzte Einlage (31) und das eingeschobene Gerüst (35) aus rostfreiem Stahl elektrisch voneinander und von dem Anschlußverbindungsstück (27) elektrisch isoliert sind.

5. Eine Rohrleitung nach Anspruch 1 oder 2, dadurch gekennzeichnet, daß die doppelt-verstärkte gekreuzte Einlage (31) sowohl von dem eingeschobenen Gerüst (35) aus rostfreiem Stahl als auch von dem Verbindungsstück (27) elektrisch isoliert ist und eine elektrische Verbindung zwischen dem eingeschobenen Gerüst (35) aus rostfreiem Stahl und dem Verbindungsstück (27) aufweist.

6. Eine Rohrleitung nach Anspruch 1 oder 2, dadurch gekennzeichnet, daß die doppelt-verstärkte gekreuzte Einlage (31) und das eingeschobene Gerüst (35) aus rostfreiem Stahl entlang der Leitung isoliert sind und durch das Verbindungsstück (27) elektrisch verbunden sind.

7. Eine Rohrleitung nach Anspruch 1 oder 2, dadurch gekennzeichnet, daß die doppelt-verstärkte gekreuzte Einlage (31) und das eingeschobene Gerüst (35) aus rostfreiem Stahl elektrisch voneinander isoliert sind und daß die doppelt-verstärkte gekreuzte Einlage (31) mit dem Anschlußverbindungsstück (27) verbunden ist und daß das eingeschobene Gerüst (35) aus rostfreiem Stahl von dem Verbindungsstück (27) elektrisch isoliert ist.

8. Eine Rohrleitung nach einem der Ansprüche 1, 2 und 4 bis 7, dadurch gekennzeichnet, daß das elektrische Kabel (53), das die Einrichtung für den Rückkehrpfad bildet, an seinem unteren Ende, das dafür vorgesehen ist, an dem Meeresboden (19) geerdet zu werden, eine Anode (55) für die Rückführung des elektrischen Stromes durch das Kabel (53) zu der Plattform aufweist, wobei die Stromrückführung entweder von der doppelt-verstärkten gekreuzten Einlage (31) oder dem eingeschobenen Gerüst (35) aus rostfreiem Stahl durch die Elektrode (55) erreicht wird, die an dem Meeresboden (19) ist und über das Kabel (53) mit der Plattform (15) verbunden ist.

9. Eine Rohrleitung nach einem der vorherigen Ansprüche, gekennzeichnet durch einen Betrieb im Gleichstrom-Modus.

10. Eine Rohrleitung nach einem der vorherigen Ansprüche, dadurch gekennzeichnet, daß ein Temperatursensor (59) in der Erdölzuführungs-Rohrleitung angebracht ist und dazu geeignet ist, ein Signal an den Gleichrichter (21) zum Steuern des Stroms durch das Kabel auszusenden und dadurch die Temperatur des Erdöls zu steuern bzw. zu kontrollieren.

## Revendications

1. Canalisation flexible sous-marine (13) comprenant un système de chauffage électrique et comprenant une couche de polyamide externe (29), une armature croisée à double renfort (31), une autre couche de polyamide éventuelle (33) (47) et une carcasse d'acier inoxydable interne (35), caractérisée en ce qu'elle comprend des moyens pour faire circuler un courant électrique à travers l'un des deux éléments, à savoir l'armature croisée à double renfort (31) et ladite carcasse d'acier inoxydable (35), un redresseur contrôlé (21) et un chemin de retour, éventuellement un câble électrique (23) disposé en parallèle avec ladite canalisation flexible (13) à l'aide de potences (25), et des bornes de connexion (27) qui isolent électriquement ladite armature croisée à double renfort (31), ladite canalisation flexible (13) s'étendant de la plate-forme (15) à un arbre de Noël immergé (17) destiné à être disposé au fond de la mer (19).

2. Canalisation selon la revendication 1, caractérisée en ce que l'extrémité supérieure de ladite canalisation flexible (13) est connectée, intérieurement, par un connecteur (27) pourvu dans sa partie supérieure d'un adaptateur (37) avec un isolant électrique (39) et un support (41), ladite armature croisée à double renfort (31) de ladite canalisation flexible (13) étant repliée et entourée par un support (43) couplé dans ledit connecteur (27) intérieurement à l'isolant électrique (39) avec une extrémité agencée sur le support (41), le courant électrique issu dudit redresseur contrôlé (21) étant conduit à travers ladite armature croisée à double renfort (31) et retournant par ledit câble électrique (23) installé à l'extérieur de ladite canalisation flexible (13).

3. Canalisation selon la revendication 1 ou 2, caractérisée en ce que ladite autre couche est une couche d'isolant électrique (47), en ce que la conduction du courant électrique est réalisée à travers l'armature croisée à double renfort (31) et la carcasse d'acier inoxydable imbriquée (35) connectée en série, et en ce que ladite armature croisée à double renfort (31) et ladite carcasse d'acier inoxydable imbriquée (35) sont isolées de l'électricité l'un de l'autre le long de la ligne du connecteur (27) et connectées électriquement à l'aide d'un conducteur électrique (49).

4. Canalisation selon la revendication 1 ou 2, caractérisée en ce que la circulation du courant électrique est réalisée à travers la carcasse d'acier inoxydable imbriquée (35) et un câble électrique (51) bloqué extérieurement sur ladite canalisation flexible (13) et connecté en série avec ladite carcasse (35), ladite armature croisée à double renfort (31) et ladite carcasse d'acier inoxydable imbriquée (35) étant isolées l'une de l'autre au plan électrique ainsi que dudit connecteur terminal (27).

5. Canalisation selon la revendication 1 ou 2, caractérisée en ce que ladite armature croisée à double renfort (31) est isolée électriquement à la fois de ladite carcasse d'acier inoxydable imbriquée (35) et dudit connecteur (27), et comprenant une connexion électrique entre ladite carcasse d'acier inoxydable imbriquée (35) et ledit connecteur (27).

6. Canalisation selon la revendication 1 ou 2, caractérisée en ce que ladite armature croisée à double renfort (31) et ladite carcasse d'acier inoxydable imbriquée (35) sont isolées le long de la canalisation et connectées électriquement via ledit connecteur (27).

7. Canalisation selon la revendication 1 ou 2, caractérisée en ce que ladite armature croisée à double renfort (31) et ladite carcasse d'acier inoxydable imbriquée (35) sont isolées électriquement l'une de l'autre, et en ce que ladite armature croisée à double renfort (31) est connectée audit connecteur terminal (27), et ladite carcasse d'acier inoxydable imbriquée (35) est isolée électriquement dudit connecteur (27).

8. Canalisation selon l'une quelconque des revendications 1, 2 et 4 à 7, caractérisée en ce que le câble électrique (53) qui constitue ledit chemin de retour possède à son extrémité inférieure une anode (55), destinée à être mise à la terre au fond de la mer (19), pour le retour du courant électrique à travers ledit câble (53) vers la plate-forme, le retour du courant à partir de ladite armature croisée à double renfort (31) ou de ladite carcasse d'acier inoxydable imbriquée (35) étant réalisé à travers ladite électrode (55) au fond de la mer (19) et étant connecté via ledit câble (53) à la plate-forme (15).

9. Canalisation selon l'une quelconque des revendications précédentes, caractérisée en ce que l'on opère en courant continu.

10. Canalisation selon l'une quelconque des revendications précédentes, caractérisée en ce qu'il y a un capteur de température (59) installé dans la canalisation d'arrivée de pétrole brut et susceptible d'envoyer un signal audit redresseur (21) pour régler le courant à travers la câble et, par suite, contrôler la température du pétrole brut.
